# EUROPEAN PATENT SPECIFICATION

(11) **EP 1 669 827 B1**
(45) Date of publication and mention of the grant of the patent: **27.03.2013**
(21) Application number: 05257462.1
(22) Date of filing: 05.12.2005
(51) Int. Cl.: G05B 19/414, G05B 19/4067, G06F 12/16

(54) **Numerical controller**
Numerische Steuervorrichtung
Dispositif de commande numérique

(30) Priority: 09.12.2004 JP 2004356443
(43) Date of publication of application: 14.06.2006
(73) Proprietor: FANUC CORPORATION, Oshino-mura Minamitsuru-gun Yamanashi 401-0597 (JP)
(72) Inventor: Hosokawa, Masahiko FANUC Manshonharimomi, Minamitsuru-gun Yamanshi, 401-0511 (JP); Sano, Masafumi FANUC Manshonharimomi, Minamitsuru-gun Yamanshi, 401-0511 (JP); Miyake, Masahiko, Hachiouji-shi Tokyo, 193-0941 (JP)
(74) Representative: Haseltine Lake LLP

(56) References cited:
- EP-A- 0 544 073
- DE-A1- 10 115 630
- JP-A- 1 241 653
- JP-A- 7 182 015
- JP-A- 2001 014 225
- US-A1- 2004 103 257
- US-B1- 6 611 850
- CHARLES M. KOZIEROK: 'BIOS Settings (CMOS Memory) Backup', [Online] 17 April 2001, The PC Guide - Site Version: 2.2.0 Retrieved from the Internet: <URL:http://www.pcguide.com/care/bu/whatBIO S-c.html> [retrieved on 2012-03-06]
- CHARLES M. KOZIEROK: 'Backup Software', [Online] 17 April 2001, The PC Guide - Site Version: 2.2.0 Retrieved from the Internet: <URL:http://www.pcguide.com/care/bu/how.htm > [retrieved on 2012-03-06]
- CHARLES M. KOZIEROK: 'Full, Selective and Incremental Backups', [Online] 17 April 2001, The PC Guide - Site Version: 2.2.0 Retrieved from the Internet: <URL:http://www.pcguide.com/care/bu/what.ht m> [retrieved on 2012-03-06]

## Description

### BACKGROUND OF THE INVENTION

### 1. Field of the Invention

The present invention relates to a numerical controller for controlling a machine tool or the like.

### 2. Description of the Related Art

The data used by a numerical controller is usually backed up to an external storage device, and if the data being used is lost or corrupted, the backup data stored in the external storage device is restored to the numerical controller.

One known type of numerical controller has a volatile memory (CMOS memory etc.) with battery backup in which frequently used data is stored, and a nonvolatile memory (flash memory etc.) not requiring battery backup in which the data in the volatile memory is saved and stored as backup data. In this numerical controller, the data stored in the battery-backed-up volatile memory is lost when the battery charge runs out. Another known type of numerical controller addresses this problem by saving the data in the battery-backed-up volatile memory to the nonvolatile memory not requiring battery backup when the residual battery power decreases (see Japanese Patent Application Laid-open No. 01-241653).

Still another known type of numerical controller allows a periodic inspection time to be specified, and when the specified periodic inspection time is reached, the data in the battery-backed-up volatile memory is saved to the nonvolatile memory not requiring battery backup (see Japanese Patent Application Laid-open No. 07-182015).

Besides these numerical controllers, there is known a POS system employed in large-scale retail stores which creates multiple generations of backup data. When data is saved as backup data, the storage location is specified, and the system reads the storage location in which the last backup file was created, checks if new backup data can be stored. When it can be stored, the system stores the backup data (see Japanese Patent Application Laid-open No. 2001-14225).

The known numerical controllers save and restore all data at once. They cannot back up only selected data, or select and restore only part of the backup data.

Further, only one generation of backup data can be saved. If a machine problem occurs or wrong data is set, however, or for checking or other purposes, one may want to restore the data to the state at shipment. One may also want to return to an earlier backup state before the current backup state. Conventional numerical controllers cannot meet these requirements.

EP 0544073 discloses a numerical control unit (NCU) that uses character codes to communicate with an external input/output apparatus. Further, internal NCU data is stored in an array format corresponding to a display format. While one set of data is being executed by the NCU, another set may be corrected by the user and some parts of program data may be specified in variables. Memo data is provided to describe each piece of data and input program data is directly sent to a buffer where it is used to control a machining operation.

US2004/0103257 A1 discloses a method of managing a generation of backup data in a storage system carried out by a storage control device. The backup data is data generated in each of a plurality of pairs originating from one volume. The method includes: receiving, from a host computer, a split request for stopping synchronization between a primary volume and a secondary volume in one of the pairs, and version information about the split; performing a split process in which a backup between the primary volume and the secondary volume of the pair is performed in response to the split request and the synchronization of the pair is stopped; and storing, for each pair, version information of the split process in a predetermined storage section.

### SUMMARY OF THE INVENTION

A numerical controller according to the present invention is defined in claim 1.

The numerical controller may further comprise a communication means for transferring data between the nonvolatile flash memory and an external storage device.

The display means may change the screen to display a list of data names and time information of the data saved by the saving means and stored in the nonvolatile flash memory. The numerical controller may further comprise a data restoring means for restoring the data corresponding to the data name extracted by the extraction means from the nonvolatile flash memory to the volatile memory.

With the above system configuration, a numerical controller according to the present invention can save and restore data specified by individual data names and perform generation management of backup data, allowing desired data to be selected and restored from among the data used in the past.

### BRIEF DESCRIPTION OF THE DRAWINGS

These and other objects and features of the present invention will be apparent from the description of the following embodiments with reference to the accompanying drawings, in which:
FIG. 1 is a functional block diagram of a numerical controller according to an embodiment of the present invention.
FIG. 2 is a block diagram of the numerical controller shown in FIG. 1.
FIG. 3 is a flowchart illustrating the data saving process performed by the CPU of the numerical controller shown in FIG. 2.
FIG. 4 is a flowchart illustrating the data restoring process performed by the CPU of the numerical controller shown in FIG. 2.

### DETAILED DESCRIPTION OF THE PREFERRED EMBODIMENTS

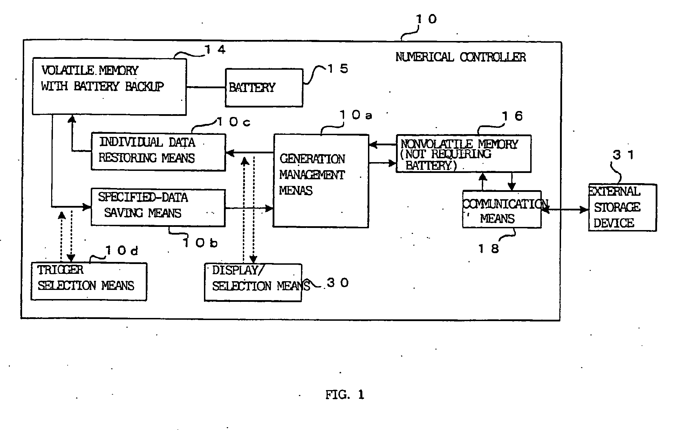

FIG. 1 is a functional block diagram of a numerical controller embodying the present invention.

The numerical controller 10 comprises a volatile memory (CMOS memory) 14 backed up by a battery 15 and a data-rewritable nonvolatile memory (flash memory) 16 not requiring battery backup. As shown in FIG. 1, numerical controller 10 further comprises a generation management means 10a, a specified-data saving means 10b, an individual data restoring means 10c, a trigger selection means 10d, and a display/selection means 30.

When the condition set in trigger selection means 10d is met, specified-data saving means 10b saves data corresponding to data names selected from a list of data names displayed on the screen of display/selection means 30 from volatile memory 14 to nonvolatile memory 16. At the same time, generation management means 10a stores in nonvolatile memory 16, together with the saved data, the data names of the saved data and time information (year, month, day, and time) giving the time at which the data is saved.

Display/selection means 30 can switch the screen and display a list of data names and time information of the data saved and stored in nonvolatile memory 16. When a data name is selected from the list on the screen, individual data restoring means 10c restores the corresponding data from nonvolatile memory 16 to volatile memory 14.

The data saved in nonvolatile memory 16 can also be transferred through communication means 18 and stored in external storage device 31.

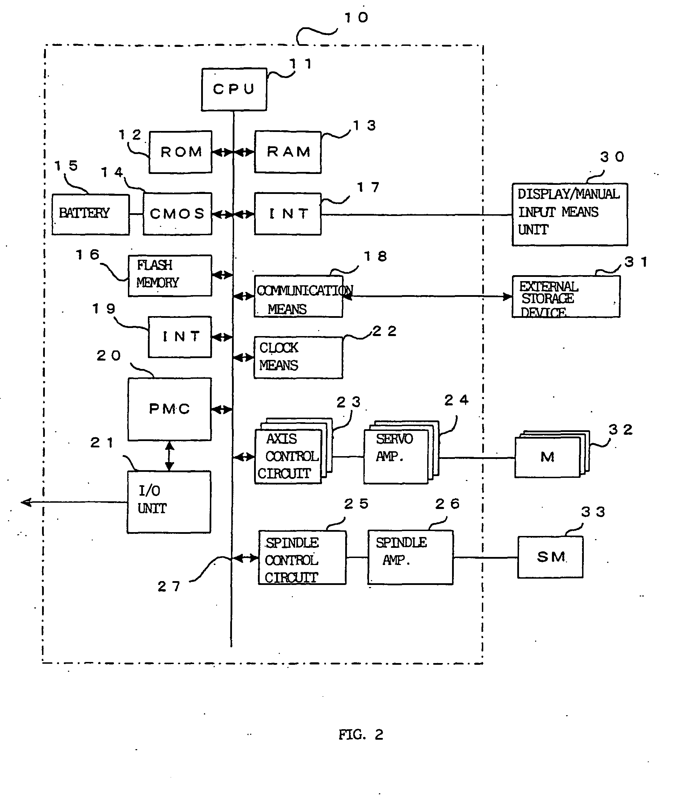

FIG. 2 is a block diagram of the numerical controller embodying the present invention, which is used for controlling a machine tool.

Reference numeral 11 denotes a processor or central processing unit (CPU) controlling the entire numerical controller 10. The processor 11 is connected through a bus 27 to a ROM 12, a RAM 13, the CMOS memory 14 or volatile memory backed up by battery 15, the nonvolatile flash memory 16 not requiring battery backup, interfaces 17, 19, a communication means 18, a programmable machine controller (PMC) 20, a clock means 22, axis control circuits 23, and a spindle control circuit 25.

The processor 11 reads out through bus 27 a system program stored in ROM 12 and controls the entire numerical controller as instructed by the system program. RAM 13 stores calculation data, display data, or other temporary data, as well as various data entered by the operator via display/manual input unit 30 (corresponding to the display/selection means 30 in FIG. 1), which includes a CRT, liquid crystal, or other display unit and a keyboard or other manual input means. CMOS memory 14 is backed up by battery 15 and retains its stored data even if numerical controller 10 is turned off. CMOS memory 14 stores various data, including data read in through interface 19 and data entered through display/manual input unit 30. Flash memory 16, which is a data-rewritable nonvolatile memory not requiring battery backup, stores backup data saved from CMOS memory 14.

Interface 19 enables the numerical controller 10 to be connected to an external device. As instructed by a sequence program stored in numerical controller 10, programmable machine controller (PMC) 20 outputs control signals through an I/O unit 21 to auxiliary devices of the controlled machine tool, which include actuators such as robot hands for changing tools. PMC 20 also receives signals from various switches on a console panel disposed on the main body of the machine tool (not shown) controlled by the numerical controller, processes these signals, and passes them to the processor 11.

Communication means 18 transfers the data stored in flash memory 16 and CMOS memory 14 to external storage device 31, so the data can also be stored in external storage device 31.

Axis control circuits 23 for each axis receive from the processor 11 commands indicating the amount of movement of each axis, and output axis movement commands for each axis to respective servo amplifiers 24. Servo amplifiers 24 receive these commands and drive servo motors 32 for each axis of the controlled machine. Servo motors 32 for each axis each have a built-in position/speed detector, and feed position and speed feedback signals from the respective position/speed detectors back to respective axis control circuits 23 for controlling position and speed. The position and speed feedback control mechanism is not shown in FIG. 1.

Given a spindle rotation command, spindle control circuit 25 outputs a spindle speed signal to a spindle amplifier 26. Receiving this spindle speed signal, spindle amplifier 26 rotates spindle motor 33 at the specified rotation speed.

The above numerical controller has the same system configuration as prior art numerical controllers, but has software for performing data saving and restoring processes, described later, stored in advance in CMOS memory 14 or ROM 12.

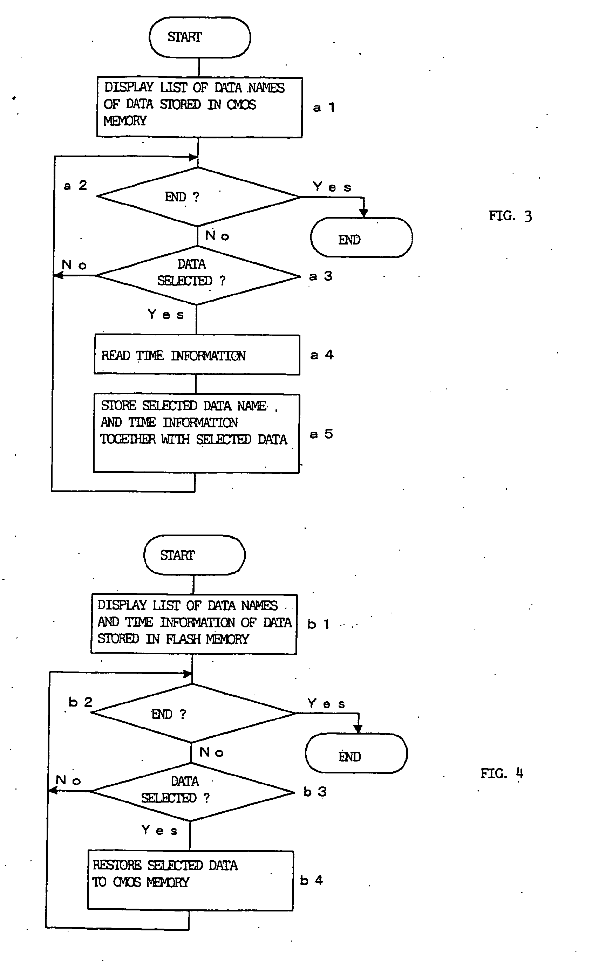

FIG. 3 is a flowchart illustrating the data saving process performed by the processor 11.

When a data save command is entered through display/manual input unit 30, the processor 11 causes a list of data names of the data stored in CMOS memory 14 to be displayed on the display unit (step a1), and repeatedly checks if a data save stop command is inputted (step a2) and checks if a data name is selected (step a3). When the operator selects a data name from the displayed list of data names by using a cursor, for example, the processor 11 reads the current date and time (year, month, day, and time) out of clock means 22 (step a4), and saves the data corresponding to the selected data name from CMOS memory 14 to flash memory 16, together with its data name and the time information read out of clock means 22 (step a5).

Then, processing returns to step a2, and the processor 11 checks if another data name is selected, and, when any data name is selected, the processor 11 saves the corresponding data to flashmemory 16, together with its data name and time information, as described above. The data saving process ends when the stop command is entered (step a2).

FIG. 4 is a flowchart illustrating the data restoring process performed by the processor 11.

When a data restore command is entered through display/manual input unit 30, the processor 11 causes the data names and time information of the data stored in flash memory 16 to be displayed on the display unit (step b1), and the processor 11 repeatedly checks if a data restore stop command is inputted (step b2) and checks if a data name is selected from the list of data names (step b3). When the operator selects a data name from the list of data names displayed on the screen by using the cursor, for example, the processor 11 causes the corresponding data to be restored to CMOS memory 14, together with its data name (step b4), and the processing returns to step b2. If another data name is selected, the processor 11 causes the selected data to be restored to CMOS memory 14, together with its data name, as described above. This data restoring process ends when the stop command is entered (step b2).

As described above, backup data saved in flash memory 16 is identified by both its data name and information giving the time at which the data was saved. Accordingly, a plurality of data generations can be stored in flash memory 16 at different times under the same data name.

When backup data recovery is requested, a list of data names and time information is displayed on the screen, so the data to be restored can be selected using the data name and time information. Thus data can be backed up per data name and generation management of the backup data can be performed.

In the above embodiment, the data saving process is started by a data save command entered by the operator through the keyboard or other manual input means. That is, the data saving operation is manually triggered. The processing shown in FIG. 3 may, however, be automatically triggered by startup of the numerical controller, elapse of a predetermined time from startup, or any other specified trigger condition.

The backup data stored in flash memory 16 can be transferred through communication means 18 and stored in the external storage device. Data stored in the external storage device can also be transferred through communication means 18 and stored in flash memory 16, and then further transferred to CMOS memory 14 and stored as described above.

## Claims

1. A numerical controller (10) comprising:
a ROM (12) containing the system program, and a RAM (13),
a volatile CMOS memory (14) with battery backup (15),
a nonvolatile flash memory (16) not requiring battery backup,
a display means (30) configured to display a list of data names of data stored in said volatile memory (14),
an extraction means (30) configured to extract a specific data name from the list of data names displayed by said display means (30), and **characterised by**
a data saving means (10b) configured to save a data corresponding to the data name extracted by said extraction means (30) from said volatile memory (14) to said nonvolatile flash memory (16),
a generation management means (10a) configured to store the data name and current time information in said nonvolatile flash memory (16), together with the data saved by said data saving means (10b),
a trigger selection means (10d) configured to set a trigger condition for triggering display by said display means (30) of the list of data names of data stored in said volatile memory, extraction by said extraction means (30) of a said specific data name from the displayed list of data names, and saving by the data saving means (10b) of the data, corresponding to the data name extracted by said extraction means, from said volatile memory (14) to said nonvolatile flash memory (16),
wherein the trigger condition set in said trigger selection means (10d) is one of startup of said numerical controller (10), elapse of a predetermined time from the startup of said numerical controller (10), and a manual operation.

2. A numerical controller (10) according to claim 1, further comprising:
a communication means (18) for transferring the data between said nonvolatile flash memory (16) and an external storage device (31).

3. A numerical controller (10) according to claim 1, further comprising:
a data restoring means (10c) for restoring data corresponding to a data name extracted by said extraction means (30) from said nonvolatile flash memory (16) to said volatile memory (14),
wherein said display means (30) switches screens and displays a list of data names and time information of the data saved and stored in said nonvolatile flash memory (16).

## Patentansprüche

1. Numerische Steuerung (10), umfassend
ein ROM (12), enthaltend das Systemprogramm, und ein RAM (13), einen flüchtigen CMOS-Speicher (14) mit Batteriepufferung (15), einen nicht-flüchtigen Flash-Speicher (16), der keine Batteriepufferung benötigt,
ein Anzeigemittel (30), ausgelegt zum Anzeigen einer Liste Datennamen von im flüchtigen Speicher (14) abgelegten Daten,
ein Entnahmemittel (30), ausgelegt zum Entnehmen eines bestimmten Datennamens aus der Liste der vom Anzeigemittel (30) angezeigten Datennamen, und **gekennzeichnet durch**
ein Datenspeichermittel (10b), ausgelegt zum Speichern von Daten, entsprechend dem vom Entnahmemittel (30) aus dem flüchtigen Speicher (14) entnommenen Datennamen im nicht flüchtigen Flash-Speicher (16),
ein Generationsverwaltungsmittel (10a), ausgelegt zum Ablegen des Datennamens und von aktueller Zeitinformation im nicht-flüchtigen Flash-Speicher (16), zusammen mit den vom Datenspeichermittel (10b) gespeicherten Daten,
ein Auslöserauswahlmittel (10d), ausgelegt zum Einstellen einer Auslösebedingung zum Auslösen einer Anzeige **durch** das Anzeigemittel (30) der Liste Datennamen von im flüchtigen Speicher abgelegten Datennamen, zur Entnahme des bestimmten Dateinamens aus der angezeigten Liste Datennamen durch das Entnahmemittel (30), und zum Speichern der Daten **durch** das Datenspeichermittel (10b), entsprechend dem vom Entnahmemittel entnommenen Datennamen, ais dem flüchtigen Speicher (14) im nicht-flüchtigen Flash-Speicher (16),
wobei die im Auslöserauswahlmittel (10d) eingestellte Auslösebedingung eines ist aus Starten der numerischen Steuerung (10), Ablauf einer vorbestimmten Zeit ab dem Start der numerischen Steuerung (10), und einem manuellen Betrieb.

2. Numerische Steuerung (10) gemäß Anspruch 1, zudem umfassend
Ein Kommunikationsmittel (18) zum Übertragen der Daten aus dem nicht-flüchtigen Flash-Speicher (16) und einer externen Ablagevorrichtung.

3. Numerische Steuerung (10) gemäß Anspruch 1, zudem umfassend
ein Datenwiederaufbereitungsmittel (10c) zum Wiederaufbereiten von Daten, entsprechend einem vom Entnahmemittel (30) aus dem nicht-flüchtigen Flash-Speicher (16) entnommenen Datennamen zum flüchtigen Speicher (14),
wobei das Anzeigemittel (30) Bildschirme wechselt und eine Liste Datennamen und Zeitinformation der gespeicherten und im nicht-flüchtigen Flash-Speicher (16) abgelegten Daten anzeigt.

## Revendications

1. Un système de commande numérique (10) comprenant :
une mémoire ROM (12) contenant le programme système et une mémoire RAM (13),
une mémoire CMOS volatile (14) avec alimentation de secours par batterie (15),
une mémoire flash non volatile (16) n'exigeant pas d'alimentation de secours par batterie,
un moyen d'affichage (30) configuré de façon à afficher une liste de noms de données relative à des données conservées en mémoire dans ladite mémoire volatile (14),
un moyen d'extraction (30) configuré de façon à extraire un nom de données spécifique de la liste de noms de données affichée par ledit moyen d'affichage (30), **caractérisé par**
un moyen de sauvegarde de données (10b) configuré de façon à sauvegarder une donnée correspondant au nom de données extrait par ledit moyen d'extraction (30) de ladite mémoire volatile (14) vers ladite mémoire flash non volatile (16),
un moyen de gestion de génération (10a) configuré de façon à placer en mémoire le nom de données et des informations temporelles actuelles dans ladite mémoire flash non volatile (16), conjointement avec les données sauvegardées par ledit moyen de sauvegarde de données (10b),
un moyen de sélection de déclencheur (10d) configuré de façon à définir une condition de déclencheur destinée à déclencher un affichage par ledit moyen d'affichage (30) de la liste de noms de données relative à des données conservées en mémoire dans ladite mémoire volatile, l'extraction par ledit moyen d'extraction (30) dudit nom de données spécifique de la liste de noms de données affichée, et la sauvegarde par le moyen de sauvegarde de données (10b) des données, correspondant au nom de données extrait par ledit moyen d'extraction de ladite mémoire volatile (14) vers ladite mémoire flash non volatile (16),
où la condition de déclencheur définie dans ledit moyen de sélection de déclencheur (10d) est une condition parmi une mise en route dudit système de commande numérique (10), un écoulement d'une durée prédéterminée à partir de la mise en route dudit système de commande numérique (10), et une opération manuelle.

2. Un système de commande numérique (10) selon la Revendication 1, comprenant en outre :
un moyen de communication (18) destiné à transférer les données entre ladite mémoire flash non volatile (16) et un dispositif à mémoire externe (31).

3. Un système de commande numérique (10) selon la Revendication 1, comprenant en outre :
un moyen de restauration de données (10c) destiné à restaurer des données correspondant à un nom de données extrait par ledit moyen d'extraction (30) de ladite mémoire flash non volatile (16) vers ladite mémoire volatile (14),
où ledit moyen d'affichage (30) commute des écrans et affiche une liste de noms de données et des informations temporelles relatives aux données sauvegardées et conservées en mémoire dans ladite mémoire flash non volatile (16).
